# FASCICULE DE BREVET EUROPEEN

(11) **EP 1 537 328 B1**
(45) Date de publication et mention de la délivrance du brevet: **21.11.2012**
(21) Numéro de dépôt: 03758270.7
(22) Date de dépôt: 26.08.2003
(51) Int. Cl.: F02N 11/04

(54) **DISPOSITIF DE COMMANDE D UNE MACHINE ELECTRIQUE TOURNANTE REVERSIBLE**
STEUERUNGSEINRICHTUNG FÜR EINE ROTIERENDE ELEKTRISCHE MASCHINE MIT UMKEHRBETRIEB
CONTROL DEVICE FOR A REVERSIBLE ROTATING ELECTRICAL MACHINE

(30) Priorité: 26.08.2002 FR 0210584; 10.03.2003 FR 0303039
(43) Date de publication de la demande: 08.06.2005
(73) Titulaire: VALEO EQUIPEMENTS ELECTRIQUES MOTEUR, 94017 Créteil Cedex (FR); Sebille, Dominique, 94110 Arcueil (FR)
(72) Inventeur: SEBILLE, Dominique, F-94110 Arcueil (FR)
(74) Mandataire: Gamonal, Didier
(86) Numéro de dépôt international: PCT/FR2003/002572
(87) Numéro de publication internationale: WO 2004/018868

(56) Documents cités:
- EP-A- 0 406 182
- EP-A- 1 138 539
- US-B1- 6 420 793
- PATENT ABSTRACTS OF JAPAN vol. 2000, no. 14, 5 mars 2001 (2001-03-05) -& JP 2000 316299 A (MITSUBA CORP), 14 novembre 2000 (2000-11-14)

## Description

### Domaine de l'invention

La présente invention est relative à un dispositif de commande d'une machine électrique tournante polyphasée et réversible, notamment un alternateur-démarreur de véhicule automobile, comprenant une unité de commande et de contrôle pour la commande de la machine électrique tournante en mode alternateur ou en mode moteur notamment pour démarrer un moteur thermique, la machine électrique tournante comportant :
- un rotor entouré d'un stator équipé d'enroulements des phases de la machine électrique,
- un onduleur qui alimente les enroulements des phases du stator pour son fonctionnement en mode moteur,
- un pont redresseur du courant engendré par les enroulements des phases du stator pour son fonctionnement en mode alternateur.
- et une batterie principale connectée sur un réseau d'alimentation en énergie électrique, tel que le réseau de bord d'un véhicule automobile, et à la masse de la machine électrique tournante.

### Etat de la technique

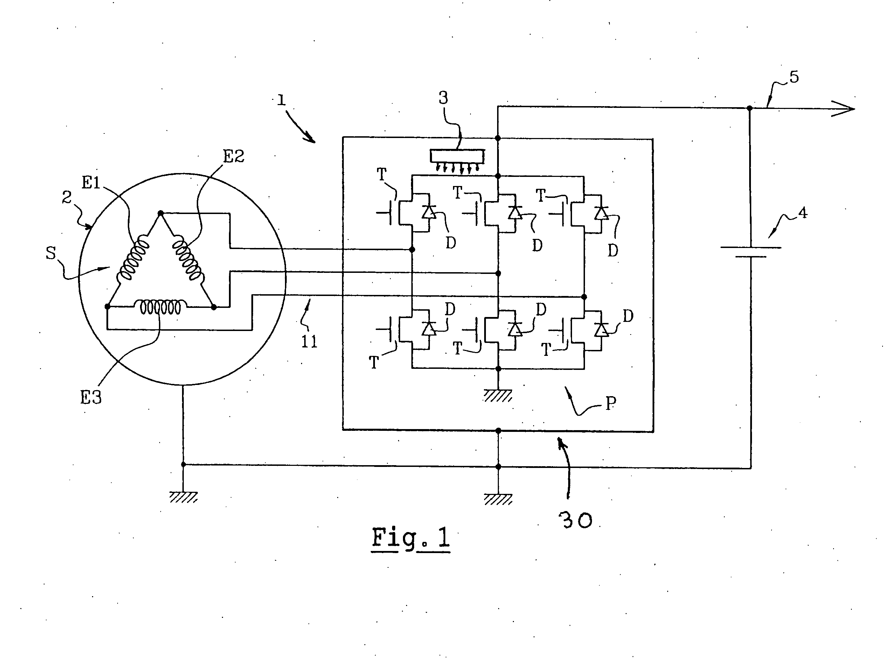

Comme représenté à la figure 1, un dispositif de commande 1 d'un alternateur-démarreur de véhicule automobile selon l'art antérieur, par exemple selon le document FR A 2 745 444 ou FR 2 745 444 (US A 6 002 219), comporte un alternateur-démarreur 2 piloté par une unité de commande et de contrôle 3. Une batterie 4 fournit l'énergie au réseau d'alimentation en énergie électrique, ici le réseau électrique de bord 5 du véhicule automobile. La batterie 4 est également connectée à l'unité de commande et de contrôle 3.

Ce type d'alternateur est une machine électrique tournante polyphasée et réversible qui peut également fonctionner en moteur électrique constituant ainsi un alternateur-démarreur 2 apte à transformer l'énergie mécanique en énergie électrique et vice versa. Ainsi, un alternateur-démarreur est apte à être utilisé, d'une part, comme générateur électrique lorsqu'il est entraîné par le moteur thermique du véhicule automobile et, d'autre part, comme moteur électrique notamment pour le démarrage de ce moteur thermique auquel il est associé. Lorsqu'il est utilisé comme générateur électrique on dit, par convention, que l'alternateur-démarreur fonctionne en mode alternateur ou générateur, tandis que lorsque qu'il est utilisé comme moteur électrique on dit, par convention, que l'alternateur-démarreur fonctionne en mode moteur c'est-à-dire au moins en mode démarreur.

Tout dépend de la puissance de la machine.

Celle-ci peut servir seulement à démarrer le moteur thermique. En variante elle peut avoir d'autres fonctions.

En effet comme décrit dans le document WO 02/060711, auquel on se reportera pour plus de précisions, lorsque la machine est utilisée comme moteur électrique celle-ci peut fonctionner selon deux modes à savoir un premier mode, dit mode démarreur, permettant d'entraîner le moteur thermique du véhicule pour démarrer celui-ci avec des couples élevés pour des vitesse de rotation basse et un second mode, dit mode moteur auxiliaire, permettant d'entraîner la machine seule ou au moins un consommateur de puissance et/ou le moteur thermique avec des vitesses de rotation plus élevées que celles du premier mode. Dans ce document WO 02/060711 les couples dans le deuxième mode sont moins élevés que dans premier mode.

Ainsi, un alternateur-démarreur en mode démarreur peut démarrer le moteur thermique d'un véhicule automobile et en mode moteur auxiliaire, constituer un moteur électrique auxiliaire pour entraîner par exemple un compresseur de climatisation ou encore, fonctionner en moteur électrique pour éviter que le moteur thermique cale et/ou entraîner le véhicule automobile au moins sur une faible distance.

Dans tous les cas on recherche un démarrage du moteur thermique.

De manière connue un alternateur-démarreur comprend :
- un rotor constituant un inducteur en mode alternateur et doté d'au moins un bobinage d'excitation associé classiquement à deux bagues collectrices et à deux balais, reliés à un régulateur de tension, par lesquels le courant d'excitation est amené au bobinage d'excitation;
- un stator polyphasé constituant un induit en mode alternateur et portant pour ce faire plusieurs phases comportant chacune au moins un bobinage ou enroulement de phase, qui sont connectés en étoile ou en triangle et qui délivrent vers un pont redresseur de courant alternatif en courant continu, en fonctionnement alternateur, la puissance électrique convertie ;
- des moyens pour le suivi de la position angulaire ou de la rotation du rotor pour, en mode moteur, injecter au bon moment du courant électrique dans le bobinage concerné du stator. Ces moyens avantageusement du type magnétique envoient des informations à l'unité de commande et de contrôle et sont décrits par exemple dans les documents FR-2807231 et FR 2806223. Ces moyens comportent donc une cible calée en rotation sur le rotor ou la poulie de la machine et au moins un capteur du type à effet Hall ou magnéto-résistif détectant le passage de la cible avantageusement du type magnétique. De préférence au moins trois capteurs sont prévus, ceux-ci étant montés sur un porte-capteurs porté par le palier avant ou arrière que comporte la machine électrique tournante pour supporter de manière fixe le stator et à rotation le rotor.

En variante les moyens pour le suivi de la position angulaire ou de la rotation du rotor consistent en un résolveur.

En général le stator comporte trois phases et trois bobinages en sorte que l'alternateur est du type triphasé.

En variante, l'alternateur comporte plus de trois phases, par exemple cinq ou six phases.

Le stator comporte de manière conventionnelle un corps, par exemple sous la forme d'un paquet de tôles, doté d'encoches, avantageusement semi fermées, pour le montage des enroulements des phases

Les bobinages ou enroulements peuvent être réalisés avec du fil bobiné dans les encoches du corps du stator ou avec des barres d'éléments conducteurs montés dans lesdites encoches pour former des réseaux d'épingles, comme décrit par exemple dans le document WO92/06527. Ces barres peuvent être de section rectangulaire ou circulaire ou hexagonale ou autre.

En variante chaque phase comporte au moins deux enroulements montés en série, comme décrit dans le document WO92/06527 précité, ou en parallèle comme décrit par exemple dans le document DE A 1563 361 ou EP A 0 454 039 ou FR A 2 737 063.

Dans tous les cas chaque phase comporte au moins un enroulement porté par le stator.

En se reportant à ces documents DE A 1563 361, EP 0 454 039 et FR A 2 737 063 on voit qu'il est prévu dans ce cas deux ponts redresseurs montés en parallèle et des connections étoile-étoile ou étoile-triangle des enroulements triphasés des phases. Un ou plusieurs enroulements sont donc montés dans chaque encoche du corps du stator.

Le stator entoure le rotor et les balais sont reliés de manière précitée à un régulateur de tension de l'alternateur pour maintenir la tension de l'alternateur à une tension voulue ici de l'ordre de 14V, pour une batterie de 12V.

Cette machine a notamment la structure d'un alternateur classique (standard) par exemple du type de celui décrit dans le document EP-A-0515259 auquel on se reportera pour plus de précisions.

Cette machine est donc à ventilation interne (refroidissement par air), son rotor portant au moins à l'une de ses extrémités axiales un ventilateur interne. En variante, la machine est refroidie par eau.

Plus précisément le stator est porté par un carter fixe comportant un palier avant et un palier arrière, tandis que le rotor est un rotor à griffes avec des roues polaires dotées chacune d'un flasque portant à sa périphérie externe des dents d'orientation axiale et de forme trapézoïdale. Les dents d'une roue polaire sont dirigées vers les dents de l'autre roue polaire, lesdites dents étant réparties de manière imbriquée d'une roue polaire à l'autre.

Bien entendu, comme décrit par exemple dans le document FR-A-2793085, des aimants permanents peuvent être intercalés entre les dents des roues polaires pour augmenter le champ magnétique et la puissance de la machine.

Le rotor porte le bobinage d'excitation précité entre les flasques de ses roues polaires. Ce bobinage comporte un élément électriquement conducteur qui est enroulé avec formation de spires. Ce bobinage est un bobinage d'excitation qui, lorsqu'il est activé par passage d'un courant électrique, magnétise le rotor pour créer à l'aide des dents des pôles magnétiques. Les extrémités du bobinage du rotor sont reliées chacune à une bague collectrice sur chacune desquelles frotte un balai. Les balais sont portés par un porte-balais solidaire du palier arrière de la machine portant centralement un roulement à billes supportant à rotation l'extrémité arrière de l'arbre portant le rotor.

L'extrémité avant de l'arbre du rotor est supportée à rotation par un roulement à billes porté par le palier avant de la machine. L'extrémité avant de l'arbre porte à l'extérieur de la machine une poulie appartenant à un dispositif de transmission de mouvement comportant au moins une courroie en prise avec la poulie. Le dispositif de transmission de mouvement établit une liaison entre la poulie et un organe, tels qu'une autre poulie, entraîné en rotation par le moteur thermique du véhicule automobile.

Lorsque la machine - ici un alternateur-démarreur - fonctionne en mode alternateur c'est-à-dire comme générateur électrique, la poulie est entraînée en rotation par le moteur thermique, dit aussi moteur à combustion interne, du véhicule via au moins la courroie précitée. Lorsque la machine fonctionne en mode moteur, par exemple en mode démarreur, c'est-à-dire en moteur électrique, la poulie entraîne en rotation le moteur du véhicule via la courroie.

Les paliers avant et arrière sont ajourés pour la ventilation interne de la machine et sont reliés entre eux, par exemple à l'aide de tirants. Ces paliers appartiennent au carter de la machine destiné à être fixé sur une partie fixe du véhicule. Ce carter ou support porte de manière fixe à sa périphérie externe le stator comportant un corps constitué de manière précitée usuellement par un paquet de tôles dotées d'encoches pour le montage des bobinages ou plus généralement des enroulements du stator dont les sorties sont reliées au pont redresseur et de commande précité.

En variante le rotor comporte plusieurs bobinages d'excitation montés autour de pôles saillants.

En variante ce rotor à pôles saillants et à plusieurs bobinages d'excitation comporte également des aimants permanents alternants circonférentiellement avec les pôles saillants et les bobinages d'excitation comme décrit dans le document WO 02/054566 auquel on se reportera pour plus d'explications. Dans ce cas le rotor comporte un corps avantageusement sous la forme d'un paquet de tôles monté sur l'arbre du rotor et découpé pour formation des pôles saillants et de logements des aimants permanents.

Lorsqu'il fonctionne en mode alternateur, l'alternateur-démarreur 2 permet de transformer un mouvement de rotation du rotor inducteur, entraîné par le moteur thermique du véhicule, en un courant électrique induit dans les enroulements du stator pour notamment charger la batterie du véhicule et alimenter électriquement les équipements et d'une manière générale les consommateurs du réseau de bord du véhicule automobile.

Lorsque l'alternateur-démarreur fonctionne en mode moteur, son stator constituant alors un inducteur et son rotor un induit, il permet d'entraîner en rotation le moteur thermique du véhicule, via l'arbre de rotor, pour notamment son démarrage.

Le dispositif qui alimente les enroulements des phases du stator de manière synchrone pour son fonctionnent en mode moteur électrique est un onduleur. Un tel onduleur peut être électronique et réalisé à partir du pont redresseur que l'on dote de moyens de commutation, tels que par exemple des transistors du type MOSFET, que l'on pilote séquentiellement, par exemple via des drivers, à partir d'une unité de commande de manière à alimenter les phases du stator de manière synchrone.

Dans ce qui précède l'onduleur alimente les enroulements des phases du stator pour son fonctionnement en mode moteur et forme un pont redresseur du courant engendré par les enroulement des phases du stator pour son fonctionnement en mode alternateur.

Selon un autre mode de réalisation, l'onduleur peut être entièrement mécanique comme décrit dans la demande de brevet FR 01-09296 déposée le 12 juillet 2001 et publiée sous le numéro FR A 2 827 7438. Dans ce cas le pont redresseur est distinct de l'onduleur et est porté par exemple par le palier arrière de la machine.

L'alternateur-démarreur 2 est piloté par l'unité de commande et de contrôle 3, qui commande ou pilote :
- un pont redresseur P de courant alternatif en courant continu relié par des moyens de liaison électrique 11 aux différentes phases de l'induit constitué par les enroulements E1, E2, E3 du stator S, connectés ici en triangle. Ce pont est monté entre la masse et une borne d'alimentation de la batterie 4 du véhicule reliée au réseau de bord 5.

Ce pont P est constitué par une pluralité de diodes D formant le pont redresseur P, ainsi que par une pluralité d'interrupteurs, tels que des transistors T, qui sont montés en parallèle sur les diodes D, et qui commandent les différentes phases de l'induit. En mode moteur, les diodes fonctionnent en diodes de roues libres et, en mode générateur ou alternateur, elles fonctionnent en pont redresseur. Les transistors T sont avantageusement des transistors de type MOSFET. On notera que de tels transistors de puissance intègrent par construction une diode entre leur drain et leur source. Ils permettent ainsi de réaliser le pont redresseur P et de commande de phase avec uniquement des composants transistors qui jouent à la fois le rôle d'interrupteurs et de diodes de roue libre.

Ainsi, dans un alternateur-démarreur le pont redresseur, possède deux modes de fonctionnement:
- mode redresseur dans lequel il redresse le courant alternatif engendré par les enroulements du stator lorsque la machine fonctionne en mode générateur ou alternateur ;
- mode commande des enroulements des phases du stator formant l'inducteur du moteur électrique. Dans ce cas, le pont redresseur fonctionne comme un onduleur qui impose par exemple un courant continu dans l'inducteur (le stator) en délivrant de manière synchrone sur les phases du stator des signaux déphasés de 120°, idéalement sinusoïdaux mais éventuellement trapézoïdaux ou carrés. Les signaux qui commandent les transistors reliés à la batterie sont commandés en opposition de phase avec les signaux qui commandent les transistors reliés à la masse. Ces signaux délivrés par l'unité 3 commandent ici les grilles des transistors et n'ont pas été représentés par simplicité.

Pour plus de précisions, on se reportera par exemple au document FR-A-2745445 précité.

L'unité de commande et de contrôle 3 est montée dans la figure 1 dans un boîtier électronique 30 contenant le pont redresseur P. L'unité 3 comporte par exemple des drivers (des pilotes), appartenant à un module électronique de puissance et de commande du pont redresseur, qui pilotent le pont redresseur pour son fonctionnement en mode onduleur en générant les signaux de commande des grilles des transistors T.

L'unité 3 comporte également une unité de gestion des drivers. Cette unité de gestion reçoit les signaux des capteurs appartenant aux moyens de suivi de la position angulaire du rotor et transmet ces signaux aux drivers qui pilotent les transistors. Les drivers comportent des entrées logiques pour sélection du mode alternateur ou moteur.

Il est en outre prévu :
- un régulateur de tension pour maintenir la tension de l'alternateur à une tension voulue ici de l'ordre de 14V, pour une batterie de 12V ;
- et avantageusement un circuit de surexcitation du rotor peut avantageusement être utilisé pour obtenir plus de couple au démarrage du moteur thermique du véhicule. Cette surexcitation peut être réalisée par une surtension aux bornes du bobinage d'excitation et/ou une surintensité dans le bobinage d'excitation du rotor par rapport à un alternateur conventionnel. Ceci peut être réalisé à l'aide d'un survolteur électronique surexcitant le bobinage du rotor uniquement en mode démarrage. Le circuit de surexcitation est actif notamment en mode démarreur pour, rendre maximal le couple de démarrage de l'alternateur-démarreur et démarrer plus aisément le moteur thermique, dit aussi moteur à combustion interne, du véhicule automobile, soit lors d'un démarrage à froid, soit lors d'un redémarrage après par exemple un arrêt à un feu rouge : le moteur ayant été coupé pour réduire la consommation de carburant et réaliser ainsi une fonction dite de Stop-GO. Ce circuit de surexcitation reçoit en entrée la tension de réseau de bord délivrée par la batterie et/ou l'alternateur et délivre aux bornes du bobinage d'excitation une tension supérieure à cette tension de réseau de bord. Pour plus de précision, on se reportera à la demande de brevet WO 01/45250 ou WO 02/060711 précitée.

Cette unité de commande et de contrôle 3 ainsi que le pont redresseur et le régulateur de tension sont par exemple placés dans le boîtier électronique 30 implanté à l'extérieur de la machine.

Lorsque l'alternateur-démarreur fonctionne en mode démarreur ou en mode moteur auxiliaire, il doit transmettre au moteur thermique un couple très élevé notamment pour garantir de bons démarrages à froid. Un fort couple au démarrage peut aussi présenter l'avantage de pouvoir utiliser un alternateur-démarreur de faible puissance pour le démarrage de véhicule de plus fortes cylindrées. Bien qu'il soit possible d'augmenter le couple au démarrage en réalisant une surexcitation du rotor, le couple maximal que peut fournir un alternateur-démarreur, dont les phases de son induit sont commandées par des créneaux ayant une tension proche de celle du réseau de bord, est limité par la valeur de la tension du réseau de bord.

Ainsi, pour un alternateur-démarreur dimensionné pour un moteur thermique, il n'est pas possible, sous une même tension de réseau de bord, de l'utiliser par exemple pour un moteur thermique plus puissant exigeant un couple de démarrage plus élevé.

Un autre problème des véhicules actuels est celui de la puissance électrique des équipements et consommateurs installés dans le véhicule qui ne cesse d'augmenter. La puissance actuelle de 2kW ne suffit plus pour certains véhicules, et on aura rapidement besoin d'une puissance de 3kW. Les autres caractéristiques de cette puissance électrique sont qu'elle doit être générée avec un rendement élevé et avec un fort niveau de sûreté de fonctionnement, ceci afin de pouvoir alimenter certaines fonctions de sécurité qui vont devenir électrique.

Si la demande en puissance crête est courte dans le temps, elle peut être assurée par la batterie, mais ce n'est pas toujours possible. Cela perturbe la stabilité du réseau de bord, et provoque des séquence préjudiciable à la durée de vie de la batterie:

Le document WO 02/080334 décrit un système d'entraînement pour véhicule automobile, comprenant un alternateur-démarreur pour l'alimentation d'un réseau de bord à haute tension (48V), un accumulateur d'énergie, une batterie principale, et des moyens de contrôle commande permettant d'obtenir diverses fonctions en fonction de divers paramètres correspondant au mode générateur ou au mode moteur. Une tension de 48V est une solution à ce problème d'augmentation de la puissance installée, mais l'alternateur-démarreur doit être conçu pour une tension de 48V, ce qui engendre un coût important comparé aux machines classiques à 12V ou 14V.

Dans le document EP 1 168 568 il est fait également appel à une batterie principale dans ce cas en trois parties.

Dans le document DE 101 03 995, conforme au préambule de la revendication 1, il est fait appel à un condensateur mais rien n'indique comment est constitué le circuit électrique liant les différents composant.

Dans le document intercalaire WO 03/099605 il est prévu des interrupteurs électroniques, qui dans certains modes de fonctionnement peuvent être fermés en même temps.

### Objet de l'invention

L'invention a pour but un dispositif de commande pour machine électrique tournante réversible, notamment un alternateur-démarreur de véhicule automobile, ne présentant pas ces inconvénients et, permettant d'utiliser un cette machine pour des véhicules automobiles exigeant une augmentation de la puissance électrique installée, et un couple de démarrage plus élevé que celui pour lequel la machine était initialement prévue.

A cet effet, l'invention propose un dispositif de commande selon la partie caractérisante de la revendication 1.

Ainsi, la machine électrique, telle qu'un alternateur-démarreur pour véhicule automobile, peut être utilisée pour différents moteurs thermiques exigeant un couple de démarrage différent, sans que la conception générale électrotechnique de la machine ne soit modifiée. Cette solution est donc simple et économique.

Le second interrupteur est traversé par le courant maximum permanent de la machine électrique en mode générateur ou alternateur, alors que le premier interrupteur est utilisé pour les phases transitoires en mode moteur et doit supporter temporairement un plus fort courant de passage.

L'invention est avantageusement complétée par les différentes caractéristiques suivantes, prises seules ou selon toutes leurs combinaisons possibles :
- la source de tension secondaire est connectée en série avec la batterie principale
- la source de tension secondaire est connectée en parallèle avec la batterie principale
- les interrupteurs sont des transistors à MOSFET.
- les interrupteurs à MOSFET sont chacun composés par deux transistors MOSFET montés tête-béche en série.
- les deux interrupteurs sont activés en opposition de phase.
- les deux interrupteurs sont pilotés par une unité de commutation et de contrôle esclave de l'unité de contrôle et de commande de l'alternateur démarreur.
- l'unité de commutation et de contrôle est intégrée dans l'unité de contrôle du démarrage.
- le niveau de charge de la source de tension secondaire est contrôlé et géré par une unité de gestion;
- l'unité de gestion consiste en un chargeur de batterie.
- l'unité de gestion consiste en une source de courant contrôlée en tension.
- la tension de la source de tension secondaire peut varier entre 3 Volts et 28 Volts.

L'unité de contrôle du démarrage comporté :
- un circuit principal renfermant la batterie principale connectée au réseau d'alimentation en énergie électrique, et un second interrupteur reliant la batterie principale au pont redresseur,
- un circuit dérivé branché en parallèle aux bornes du circuit principal, et comprenant la source de tension secondaire en série avec un premier interrupteur,
- et un convertisseur DC/DC réversible connecté électriquement entre le circuit principal et le circuit dérivé entre le pôle positif de la batterie principal et un point milieu du premier interrupteur et de la source de tension secondaire.

Dans les deux cas de couplage série ou parallèle, la conception générale électrotechnique de l'alternateur-démarreur de véhicule automobile, n'est pas modifiée suite à la conservation de la tension classique à 14V.

L'insertion de la source de tension secondaire, combinée avec l'usage du convertisseur DC/DC géré par un circuit superviseur permet d'augmenter le couple de démarrage, et de travailler de façon temporaire sous une tension plus élevée pour bénéficier de plus d'énergie sur le réseau d'alimentation en énergie électrique.

Les caractéristiques suivantes prises seules ou en combinaison peuvent être utilisées pour un couplage parallèle :
- un circuit superviseur permet de contrôler et de piloter l'état de commutation des interrupteurs de puissance, l'état de charge de la batterie principale et de la source de tension secondaire, le sens de conversion du
   convertisseur DC/DC, et le mode de fonctionnement du pont redresseur en générateur ou en moteur.
- le second interrupteur est traversé par le courant maximum permanent de l'alternateur démarreur en mode générateur ou alternateur, alors que le premier interrupteur est utilisé pour les phases transitoires lorsque la tension de sortie de l'alternateur démarreur est supérieure à un seuil de tension prédétermine, notamment 14V.
- le circuit superviseur inverse l'état de commutation des interrupteurs lorsque la tension de sortie de l'alternateur est régulée au-dessus du seuil de tension, le deuxième interrupteur étant ouvert, et le premier interrupteur étant fermé, de manière à fournir le courant du réseau de bord par le convertisseur DC/DC.
- l'énergie de la machine électrique fonctionnant en mode générateur permet en position de fermeture du premier interrupteur, d'autoalimenter le convertisseur DC/DC et de charger la source de tension secondaire en accumulant de l'énergie.
- des récepteurs de forte puissance peuvent être connectées électriquement en parallèle du circuit dérivé et de l'alternateur démarreur.

### Description sommaire des dessins

D'autres avantages et caractéristiques ressortiront plus clairement de la description qui va suivre de modes particuliers de réalisation de l'invention donnés à titre d'exemples non limitatifs, et représentés aux dessins annexés dans lesquels :
- la figure 1 montre un schéma d'un dispositif de démarrage d'un alternateur-démarreur selon l'art antérieur.
- la figure 2 montre un schéma d'un dispositif de démarrage d'un premier mode de réalisation d'un alternateur-démarreur selon l'invention.
- la figure 3 montre un schéma d'un dispositif de démarrage d'un deuxième mode de réalisation d'un alternateur-démarreur avec un onduleur mécanique selon l'invention.
- la figure 4 montre un schéma électrique d'un troisième mode de réalisation d'un alternateur-démarreur selon l'invention.
- la figure 5 représente une variante de la figure 4.

### Description de mode particuliers de réalisation

Par simplicité les éléments communs aux différentes figures seront affectés des mêmes signes de référence.

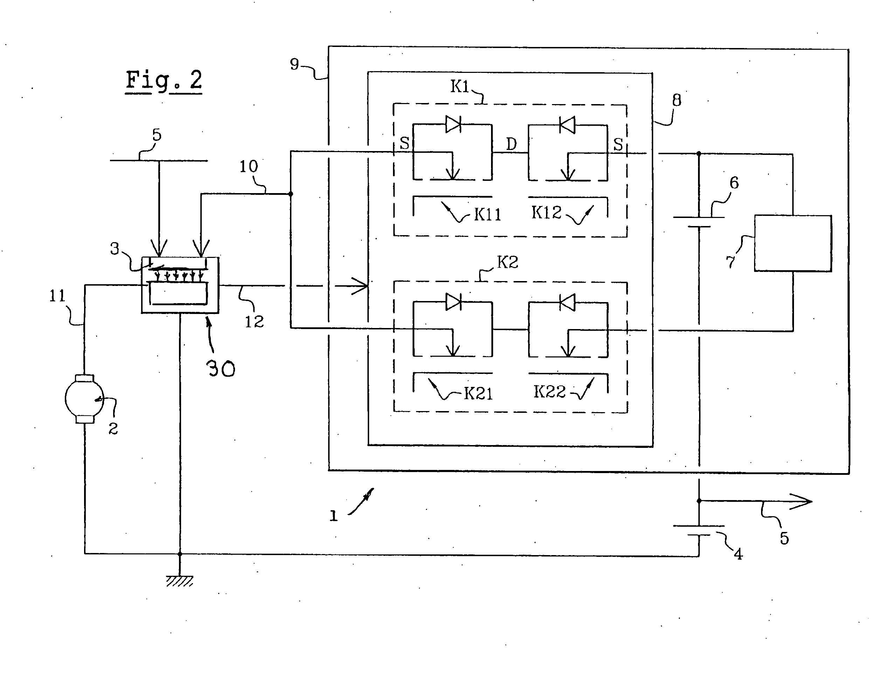

Dans les figures 2 à 5 la machine électrique tournante polyphasée et réversible est un alterno-démarreur pour véhicule automobile. Cette machine est, de manière précitée, configurée pour fonctionner de manière réversible , d'une part, en générateur électrique dans un mode alternateur et, d'autre part, en moteur électrique dans un mode démarreur pour démarrer un moteur thermique, ici celui d'un véhicule automobile.

Le réseau d'alimentation en énergie électrique est constitué alors par le réseau de bord 5 du véhicule sur lequel sont branchés les équipements et les consommateurs installés à bord du véhicule.

Selon un premier mode de réalisation de l'invention et tel que représenté à la figure 2, le dispositif de commande de l'alternateur-démarreur 2 d'un véhicule automobile comporte, comme à la figure 1, une unité de commande et de contrôle 3 de l'alternateur-démarreur placée dans un boîtier électronique 30, et connectée à l'alternateur-démarreur par des moyens de liaison électrique 11, par exemple une liaison à connecteurs et câbles décrite dans le document WO 02/060038. Le boîtier électronique 30 contient l'onduleur et le pont redresseur P à interrupteurs commandés, représentés à la figure 1, pilotés par l'unité 3. Une batterie 4 est connectée entre le réseau de bord 5 du véhicule automobile et la masse de la machine.

Selon une caractéristique de l'invention, une unité de contrôle du démarrage 9 est insérée entre le réseau de bord 5 du véhicule (ou la borne positive de la batterie principale 4) et l'unité de commande et de contrôle 3 de l'alternateur-démarreur.

Cette unité de contrôle du démarrage 9 comporte une source de tension secondaire 6 montée en série avec la batterie principale 4. Ainsi, la borne positive de la batterie principale 4 est reliée électriquement à la borne négative de la source de tension secondaire 6. L'unité de contrôle et de commande 3, pilotant l'onduleur et le pont redresseur, est reliée par un moyen de liaison électrique 10, d'une part, à la borne positive de la source de tension secondaire 6 via un premier interrupteur K1 et d'autre part, à la borne positive de la batterie principale 4 via un second interrupteur K2.

Cette source de tension secondaire 6 permet ainsi d'alimenter les enroulements des phases du stator de l'alternateur-démarreur 2, via l'onduleur monté dans le boîtier électronique 30 contenant l'unité de contrôle et de commande 3, sous une tension supérieure à celle disponible sur le réseau de bord 5.

Selon l'usage, la valeur de la source de tension secondaire peut varier entre 3V et 12 V. Ainsi, si le réseau de bord 5 à une tension d'environ 14V, les phases de l'inducteur de l'alternateur-démarreur 2 fonctionnant en mode démarreur, c'est-à-dire en moteur électrique, peuvent être alimentées, via l'onduleur, sous une tension pouvant varier entre 15 et 24 Volts.

Une unité de commutation et de contrôle 8 gère les interrupteurs K1 et K2. Ainsi selon l'invention, l'unité de commutation et de contrôle 8 pilote les interrupteurs K1 et K2 de manière à ce qu'ils soient ni ouverts ni fermés en même temps. Les interrupteurs K1 et K2 sont donc pilotés en opposition de phase.

Cette unité de commutation et de contrôle 8 est ici intégrée dans l'unité de contrôle du démarrage 9 et est esclave par rapport à l'unité de commande et de contrôle 3 de l'alternateur-démarreur. Ainsi, lorsque l'alternateur-démarreur est en mode démarreur, l'unité de contrôle et de commande 3 envoie, par exemple par l'intermédiaire d'une liaison électrique filaire 12, un ordre à l'unité de commutation et de contrôle 8 pour simultanément ouvrir l'interrupteur K2 et fermer l'interrupteur K1. Ainsi les phases du stator de l'alternateur-démarreur sont alimentées au moins pendant la phase de démarrage du moteur thermique du véhicule automobile sous une tension supérieure à celle présente sur le réseau de bord 5.

Lorsque l'alternateur-démarreur a terminé sa séquence de démarrage, il passe en mode alternateur. L'unité de contrôle et de commande 3 envoie alors, par exemple par l'intermédiaire de liaison filaire 12, un ordre à l'unité de commutation et de contrôle 8 pour simultanément ouvrir l'interrupteur K1 et fermer l'interrupteur K2. Ainsi l'alternateur-démarreur peut débiter du courant sur le réseau de bord 5 par l'intermédiaire du pont redresseur contenu dans le boîtier 30 contenant l'unité de contrôle et de commande 3 de l'alternateur-démarreur.

Selon une caractéristique de l'invention, les interrupteurs présentent des caractéristiques différentes. L'interrupteur K1, dédié uniquement à la phase de démarrage de l'alternateur-démarreur doit par exemple pouvoir supporter le passage d'un courant de démarrage de l'ordre de 600A alors que l'interrupteur K2 doit pouvoir supporter un courant de charge de l'alternateur d'environ 150A.

Ces deux interrupteurs K1 et K2 peuvent être de type électromécanique (relais ou contacteur) ou électroniques, par exemple des transistors de type MOSFET. Le choix est réalisé en fonction des conditions d'utilisation et des contraintes liées par exemple au bruit ou à la fréquence d'utilisation. On notera que les interrupteurs du type électronique sont du type statique. Ces interrupteurs électroniques sont avantageux car ils sont plus économiques, mois bruyants, plus fiable et d'une grande durée de vie.

Avantageusement, selon une caractéristique de l'invention, les interrupteurs K1 et K2 sont respectivement déclinés chacun en deux interrupteurs électroniques de puissance à MOSFET de type N, K11, K12 et K21, K22, montés tête-bêche et en série, afin d'assurer la réversibilité en tension du système et ainsi protéger le montage contre les inversions de polarité lors du branchement de l'une ou l'autre sources de tension.

Dans le cas où la protection contre l'inversion de polarité est assurée de manière différente, alors K12 et K22 ne sont plus nécessaires, et seuls les interrupteurs K11 et K21 qui ont leurs drains reliés à une batterie sont maintenus.

La source de tension secondaire 6, selon l'application, peut être une ultracapacité aussi appelé supercondensateur ou condensateur double-couche ou bien encore une batterie de faible capacité mais de forte puissance, de manière à pouvoir délivrer un fort courant sous un faible encombrement uniquement lors des phases de démarrage du moteur thermique.

La charge de cette source de tension est assurée par un moyen de charge 7 qui peut être un chargeur, ou une source de courant contrôlée en tension.

Les bornes de ce moyen de charge sont reliées électriquement ici aux transistors K12 et K22.

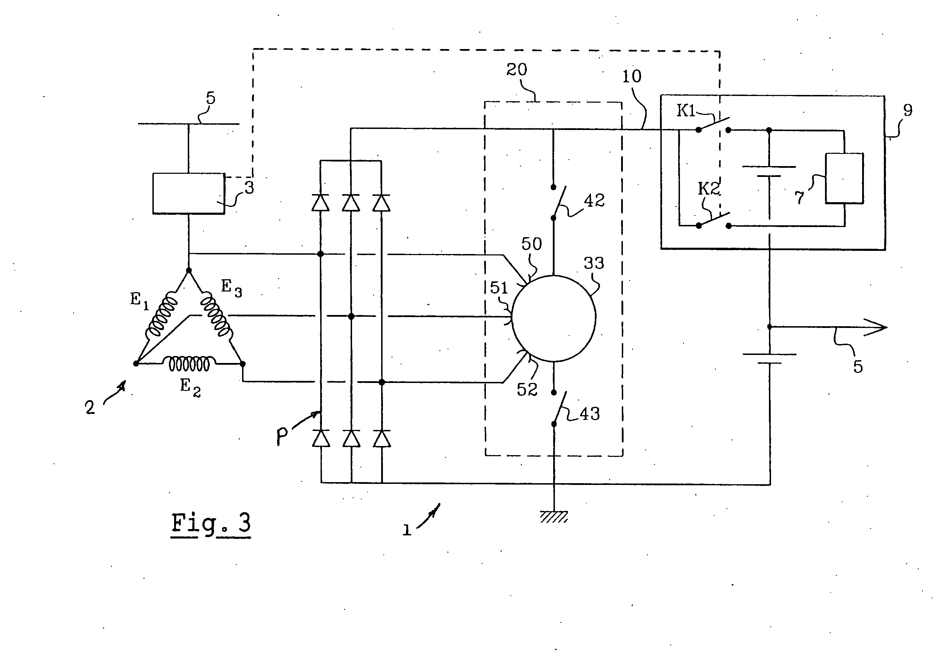

Selon un deuxième mode de réalisation, comme représenté à la figure 3, les enroulements des phases du stator de l'alternateur-démarreur peuvent être alimentées en courant de manière synchrone, en phase démarrage, par un onduleur mécanique tel que mentionné précédemment.

Les enroulements E1, E2, E3 des phases du stator ont des sorties qui sont, par exemple, connectées en triangle et sont reliées au pont redresseur P à diodes par exemple porté par le palier arrière de l'alternateur-démarreur.

Cet onduleur mécanique 20 comporte trois parties, à savoir deux bagues lisses (non représentées) et un collecteur à lames 33. Les bagues et le collecteur sont portés par un corps rotatif (non représenté).

Selon l'invention, les bagues sont reliées chacune via un balai et par l'intermédiaire d'un contact mécanique 42, 43 d'un contacteur de puissance, d'une part à la sortie 10 de l'unité de contrôle de démarrage 9 précédemment décrite, et qui contient la source de tension secondaire 6, et d'autre part à la masse.

Ainsi, en mode démarreur, l'unité de commande et de contrôle 3 donne l'ordre à l'unité de commutation et de contrôle du démarrage 9 de fermer K1 et d'ouvrir K2, ce qui permet d'alimenter l'onduleur mécanique 20 et par voie de conséquence les enroulements E1, E2, E3 du stator sous une tension supérieure à celle présente sur le réseau de bord, ladite tension correspondant à la mise en série des deux batteries 4 et 6.

A l'onduleur mécanique 20 sont associés trois balais 50, 51, 52 qui sont disposés autour du collecteur en contact de frottement avec les lames. Les balais sont écartés les uns des autres d'un angle électrique de 120°. Les balais 50, 51, 52 sont reliés respectivement aux enroulements 12, 13 et 14 du stator de l'alternateur 2. Ainsi chaque borne d'enroulement reçoit successivement les potentiels positif, neutre, négatif, neutre, positif et ainsi de suite.

Par conséquent l'ensemble qui vient d'être décrit fonctionne en onduleur mécanique. Pour plus de précisions, on se reportera demande de brevet FR 01-09296 déposée le 12 juillet 2001 et publiée sous le numéro FR A 2 827 438.

Dans ce cas l'unité 3 pilote l'alimentation électrique de la bobine du dispositif d'accouplement, agissant sur un manchon cannelé intérieurement engagé simultanément sur une portion cannelé de l'extrémité arrière de l'arbre du rotor et sur une portion cannelée d'un arbre de l'onduleur en mode moteur.

Bien évidemment, l'invention peut également s'appliquer à des démarreurs classiques pour lesquels on désire réduire le temps de démarrage du moteur thermique du véhicule automobile pour le confort du conducteur, par exemple dans des applications de coupure et de démarrage du démarreur par une commande automatique "Stop and go" selon la terminologie anglo-saxonne utilisée par l'homme du métier. Dans un tel démarreur, il est également possible, selon l'invention, d'alimenter les enroulements du rotor du démarreur électrique, commandés par un onduleur mécanique, sous une tension supérieure à celle présente sur le réseau de bord au moyen d'une source de tension secondaire 6 en série avec la batterie principale 4 de 12 Volt.

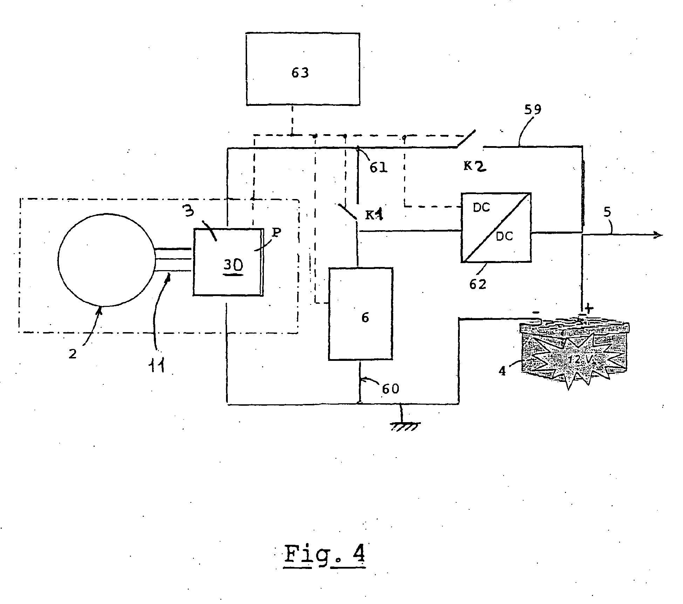

En variante (figure 4) la source de tension secondaire 6, d'une part, peut agir également sur un convertisseur DC/DC et ainsi avoir une double fonction et d'autre part, est branchée en parallèle avec la batterie principale 4.

Dans ce troisième mode de réalisation illustré à la figure 4, les mêmes numéros de référence seront utilisés pour désigner des pièces identiques ou similaires à celles des figures 1 à 3. L'alternateur-démarreur 2 est une machine standard à 14 Volts comportant un pont redresseur P conforme à celui de la figure 1. Ce pont P est pilotée par l'unité de commande et de contrôle 3. Une batterie 4 principale alimente le réseau de bord 5 à 12V, et est connectée dans un circuit principal 59 entre la masse et le pont redresseur P à travers un deuxième interrupteur K2.

Le pont redresseur P, formant de manière précitée un onduleur en mode démarreur, est donc relié à la borne positive de la batterie principale 4 via l'interrupteur K2.

Un circuit dérivé 60 branché en parallèle aux bornes du pont redresseur P, comprend une source de tension secondaire 6 en série avec le premier interrupteur K1. Les deux circuits 59, 60 sont connectés en parallèle entre la masse et un point commun 61 des deux interrupteurs K1 et K2. La source de tension secondaire 6 peut être une batterie 18V ou 24V, ou un montage de condensateurs double couche du type SCAP dont la tension maximale est comprise entre 20V et 28V.

Le premier interrupteur K1 est relié électriquement à une borne d'entrée d'un convertisseur DC/DC 62 branché par sa borne de sortie au pôle positif de la batterie principale 4. Le convertisseur DC/DC 62 a une tension d'entrée pouvant varier de 0 à 28V, pour délivrer une tension de sortie comprise entre 13V et 15V. La puissance nominale du convertisseur DC/DC 62 est de préférence comprise entre 400W et 1000W, tandis que sa puissance transitoire peut être augmentée de 50% avec une courbe de déclassement fonction de la température. Le sens de conversion du convertisseur DC/DC 62 peut être modifié en fonction des phases de fonctionnement de l'alternateur-démarreur 2.

Le second interrupteur K2 peut supporter le courant maximum de l'alternateur-démarreur 2 compris entre 100A et 250A continu permanent.

Le premier interrupteur K1 est utilisé pour les phases transitoires ainsi que pour les phases de démarrage lorsque la tension de sortie de l'alternateur-démarreur 2 est supérieure à 14V. Il peut supporter un courant permanent compris entre 50A et 150A, et un courant transitoire allant jusqu'à 600A.

Un circuit superviseur 63 permet de contrôler et de piloter l'état de commutation des interrupteurs K1, K2, l'état de charge de la batterie principale 4 et de la source de tension secondaire 6, le sens de conversion du convertisseur DC/DC 62, et le mode de fonctionnement du pont redresseur P en générateur électrique ou en moteur électrique.

Ce superviseur 63 appartient donc en partie à l'unité de commande et de contrôle 3 car il agit, par exemple, sur les drivers pour faire travailler le pont P en mode redresseur ou en mode de commande des enroulements des phases (fonctionnement en onduleur).

Bien entendu le superviseur peut être monté dans le boîtier 30 contenant l'unité 3 ou à l'extérieur de celui-ci. Ce boîtier peut contenir seulement le pont P et éventuellement une partie de l'unité 3, par exemple les drivers précités. Tout cela dépend des applications

Le fonctionnement du circuit d'interconnexion de l'alternateur-démarreur 2 de la figure 4 est le suivant :

### Moteur thermique du véhicule en fonctionnement après démarrage.

### Phase A

Après le démarrage, le moteur thermique du véhicule entraîne en rotation l'alternateur-démarreur 2 lequel fonctionne en mode générateur ou alternateur. Dans le cas où la tension de sortie de l'alternateur est régulée entre 13V et 15V par le régulateur de tension, le deuxième interrupteur K2 est fermé, tandis que le premier interrupteur K1 est ouvert. La fermeture du second interrupteur K2 permet de fournir le courant au réseau de bord 5 par la machine tournante, le convertisseur DC/DC 62 pouvant être actif ou hors service. Dans le cas où le convertisseur DC/DC 62 est en fonctionnement, il est alimenté par la source de tension secondaire 6 tant que l'énergie reste disponible. Le convertisseur DC/DC 62 est alors régulé en courant en adaptant la tension de sortie à celle de l'alternateur. Le courant délivré par le convertisseur DC/DC 62 s'ajoute à celui de l'alternateur dans le réseau de bord 5.

### Phase B

Dans le cas où la tension de sortie de l'alternateur est régulée à une tension supérieure à 15V, le circuit superviseur 63 inverse l'état de commutation des interrupteurs K1, K2. Le second interrupteur K2 est ouvert, et le premier interrupteur K1 est fermé, de manière à fournir le courant au réseau de bord 5 par le convertisseur DC/DC 62, lequel est régulé en tension à sa sortie. Lorsque le courant consommé dans le réseau de bord 5 est supérieur à la puissance du convertisseur DC/DC 62, ce dernier est régulé en mode courant et maintient sa puissance maximale. Le complément de puissance est alors fourni par la batterie principale 4, laquelle impose sa tension de sortie au convertisseur DC/DC 62 et au réseau de bord 5. Le convertisseur DC/DC 62 est autoalimenté par l'énergie de l'alternateur, et la source de tension secondaire 6 (batterie ou condensateurs) est chargée en accumulant de l'énergie.

### Moteur thermique du véhicule à l'arrêt.

### Phase C

L'alternateur-démarreur 2 est piloté par le circuit superviseur 63 pour un fonctionnement en moteur électrique adapté au démarrage du moteur thermique (mode démarreur).

Si l'état de charge de la source de tension secondaire 6 se situe entre 12V et 28V, l'alternateur-démarreur 2 est alimenté exclusivement par la source de tension secondaire 6, à une tension supérieure à la tension nominale de 12V de la batterie principale 4. Le premier interrupteur K1 est fermé, et le deuxième interrupteur K2 est ouvert durant ce processus. Le couple de démarrage du démarreur est ainsi augmenté suite au survoltage généré par la décharge de la source de tension secondaire 6.

### Phase D

Si l'état de charge de la source de tension secondaire 6 est inférieure à 12V, c'est à dire inférieur à la tension nominale de la batterie principale 4, le convertisseur DC/DC 62 réversible est commuté en inverse par le circuit superviseur 63, de manière à recharger la source de tension secondaire 6 à la tension requise pour démarrer le moteur thermique. Le premier interrupteur K1 est ouvert durant la séquence de charge de la source de tension secondaire 6.

### Phase E

Lors de la rotation du moteur thermique, le circuit superviseur 63 peut envoyer un ordre d'ouverture aux deux interrupteurs K1 et K2, de manière à autoriser l'alimentation conjointe du réseau de bord 5 par la batterie principale 4, et par la source de tension secondaire 6 à travers le convertisseur DC/DC 62 réversible. La batterie principale 4 et la source de tension secondaire 6 sont alors connectées en parallèle.

Le circuit superviseur 63 peut ainsi piloter la gestion de plusieurs phases de fonctionnement du véhicule pour améliorer le rendement de l'alternateur-démarreur :

| **S1 - SITUATION** | **PHASE** |
|---|---|
| Démarrage après un arrêt court (<1 semaine) | C |
| Roulage type route (<100 km/h) et vitesse constante | A |

| Roulage type autoroute (<100 km/h) et vitesse constante | A commutation en B et C possible |
|---|---|
| Si freinage | A → B |
| De nouveau roulage | B → E |
| Roulage à vitesse lente avec fort courant absorbé | B |
| Démarrage après un arrêt long (>1 semaine) | D |

Lors du roulage à vitesse constante sur autoroute, le circuit superviseur 63 détecte que la consommation du réseau de bord 5 est inférieure à la puissance du convertisseur DC/DC 62. L'alternateur est alors commuté en phase B. Dans ces conditions, son rendement peut augmenter de 10%, cependant que le convertisseur DC/DC 62 a un rendement de 95%, on améliore globalement le rendement de génération de 5%, soit 50W sur une consommation de 1000W.

En cas de freinage, on utilise successivement les phases B et C. Pendant la phase de décélération, le circuit superviseur 63 décide d'abord le fonctionnement en phase B, avec chargement de la source de tension secondaire 6. On passe ensuite en phase C, suivi de la décharge de la source de tension secondaire 6 à travers le convertisseur DC/DC 62. Cependant la tension minimale de la source de tension secondaire 6 est gardée à une valeur donnée idéale pour effectuer un redémarrage.

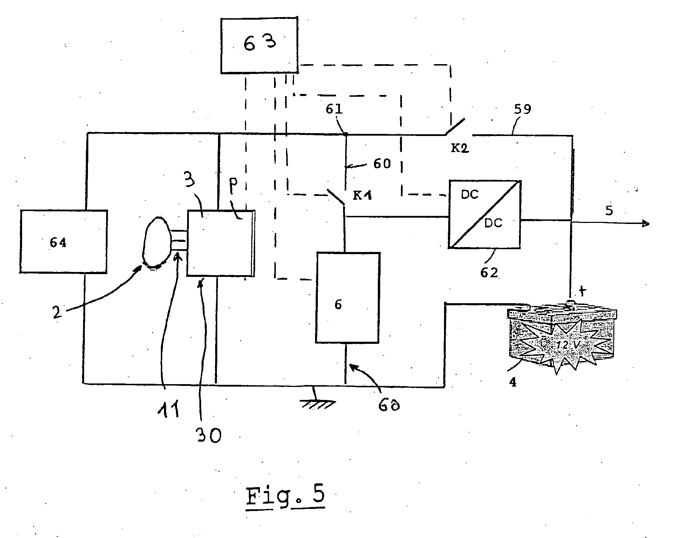

En référence à la figure 5, des récepteurs 64 de forte puissance sont connectés aux bornes de l'alternateur-démarreur 2, notamment un pare-brise chauffant, le système de climatisation, et tout autre circuit électrique auxiliaire. Ces récepteurs 64 sont ainsi branchés en parallèle aux bornes du circuit dérivé 60. Pour augmenter leur puissance il suffit de passer de la phase A à la phase B, et de régler la tension de génération à la valeur désirée.

Bien entendu la présente invention n'est pas limitée aux exemples de réalisation décrits.

Ainsi le boîtier électronique 30 est en variante porté par la machine en étant par exemple porté par la périphérie externe du carter de celle-ci.

En variante le pont redresseur et/ou le régulateur de tension sont portés par le palier arrière de la machine tandis que l'unité de commande et de contrôle 3 est implantée à l'extérieur de la machine. En variante l'étage de puissance de cette unité 3, contenant les drivers précités, est porté, ainsi que le pont par le palier arrière de la machine, tandis que l'unité de gestion de cette unité de commande et de contrôle est placée à l'extérieur de la machine, comme décrit par exemple dans la demande de brevet FR 02 08420 déposée le 04/07/2002. Dans ce cas chaque driver est connecté à proximité des transistors d'une branche du pont redresseur.

A la lumière de ce document FR 02 08420 on voit que le pont redresseur peut comporter plusieurs modules comportant chacun des transistors de puissance, par exemple du type MOSFET, et un driver.

Bien entendu chaque transistor du type MOSFET est dans un mode de réalisation constitué par un ensemble de transistors montés en parallèle pour notamment réduire les échauffements. Cela est applicable notamment aux transistors du pont redressement et/ou aux interrupteurs K1 et K2

Il ressort de la description que le dispositif de commande selon l'invention est utilisable en mode démarreur pour démarrer à froid le moteur thermique et peut être également utilisable pour redémarrer le moteur thermique par exemple après un arrêt au feu rouge, ainsi que pour éviter que le moteur thermique ne cale notamment au régime de ralenti. Dans ce dernier cas l'unité 3 pilote la machine pour faire fonctionner celle-ci temporairement en mode moteur. Cette fonction d'assistance du moteur thermique est appelée fonction boost. On peut également grâce à l'invention déplacer temporairement le véhicule à l'aide de la machine, par exemple lors de manoeuvre de parking. On peut également à l'aide de la machine selon l'invention aider la mise en route d'un turbo compresseur.

D'une manière générale le dispositif selon l'invention est également utilisable en mode moteur auxiliaire notamment lors d'un arrêt du véhicule au feu rouge, pour entraîner temporairement au moins un accessoire. On peut utiliser le dispositif pour entraîner la machine seule avant de passer en mode alternateur en sorte qu'un dispositif de débrayage, tel qu'un embrayage électromagnétique ou une roue libre pilotée, peut intervenir entre le machine et le moteur thermique. Un dispositif de débrayage peut également intervenir entre la machine et l'accessoire ou équipement à assister. Pour plus de précisions on se reportera par exemple au document WO 02/060711 précité, la machine électrique pouvant être déconnectée du moteur thermique en mode moteur auxiliaire.

Bien entendu la machine selon l'invention permet de démarrer un moteur thermique et peut réaliser seulement une partie des fonctions précitées.

Le véhicule automobile peut être du type terrestre, tel qu'un véhicule de tourisme, un camion, un bus ou autre.

En variante l'invention est applicable aux bateaux à moteur thermique.

## Revendications

1. Dispositif de commande (1) d'un alternateur-démarreur (2)de véhicule automobile, configuré pour être reliée à une masse et pour fonctionner de manière réversible en générateur électrique dans un mode dit mode alternateur et en moteur électrique dans un mode dit mode moteur pour démarrer un moteur thermique, comprenant une unité de commande et de contrôle (3) pour la commande de l'alternateur-démarreur en mode alternateur ou en mode moteur, un réseau d'alimentation en énergie électrique (5), une batterie principale (4) connectée sur le réseau d'alimentation en énergie électrique (5) et à la masse de l'alternateur-démarreur,l'alternateur-démarreur comportant :
- plusieurs phases comprenant chacune au moins un enroulement (E1, E2, E3),
- un stator (S) équipé des enroulements des phases,
- un onduleur (P, 20) comportant des interrupteurs commandés (T) qui alimente les enroulements des phases du stator pour son fonctionnement en mode moteur
- un pont redresseur (P) du courant engendré par les enroulements des phases du stator pour son fonctionnement en mode alternateur, dans lequel l'onduleur (P,20) est alimenté en mode moteur par une unité de contrôle du démarrage (9) comportant une source de tension secondaire (6) et apte à fournir une tension supérieure à celle présente sur le réseau d'alimentation en énergie électrique (5) pour augmenter le couple de l'alternateur-démarreur au démarrage du moteur thermique la source de tension secondaire (6) étant distincte de la batterie principale (4) et consistant en au moins un condensateur double-couche, **caractérisé en ce que** l'onduleur est relié à la borne positive de la source de tension secondaire (6) via un premier interrupteur (K1) du type électronique en mode moteur, tandis que le pont redresseur (P) est relié à la borne positive de la batterie principale (4) via un second interrupteur (K2) du type électronique en mode alternateur, **en ce qu'**il comporte un circuit (8, 63) de pilotage de l'état de commutation du premier (K1) et du second interrupteur (K2) configuré pour que ces deux interrupteurs ne soient pas fermés en même temps, **en ce que** le premier interrupteur (K1) et le second interrupteur (K2) présentent des caractéristiques différentes et **en ce que** le second interrupteur (K2) supporte le courant maximum permanent de la machine électrique en mode alternateur, tandis que le premier interrupteur (K1) supporte temporairement un courant plus élevé pour les phases transitoires en mode moteur.

2. Dispositif de commande (1) selon la revendication 1, **caractérisé en ce que** l'unité de contrôle du démarrage (9) comporte une source de tension secondaire (6) connectée en série avec la batterie principale (4).

3. Dispositif de commande (1) selon la revendication 1, **caractérisé en ce que** l'unité de contrôle du démarrage (9) comporte une source de tension secondaire (6) connectée en parallèle avec la batterie principale (4).

4. Dispositif de commande (1) selon l'une quelconque des revendications 1 à 3, **caractérisé en ce que** les premier et deuxième interrupteurs (K1, K2) sont des transistors du type MOSFET.

5. Dispositif de commande (1) selon la revendication 4, **caractérisé en ce que** les interrupteurs MOSFET (K1, K2) sont chacun composés par deux transistors MOSFET montés tête-bêche en série (K11, K12, K21, K22).

6. Dispositif de commande (1) selon la revendication 4, **caractérisé en ce que** les deux interrupteurs (K1, K2) sont activés en opposition de phase.

7. Dispositif de commande (1) selon l'une quelconque des revendications 1 à 6, **caractérisé en ce que** les deux interrupteurs (K1, K2) sont pilotés par une unité de commutation et de contrôle (8) esclave de l'unité de contrôle et de commande (3) de l'alternateur-démarreur.

8. Dispositif de commande (1) selon l'une quelconque des revendications 1 à 7, **caractérisé en ce que** le niveau de charge de la source de tension secondaire (6) est contrôlé et gérée par une unité de gestion (7).

9. Dispositif de commande (1) selon l'une quelconque des revendications 1 à 9, **caractérisé en ce que** la tension de la source de tension secondaire (6) peut varier entre 3 Volts et 12 Volts.

10. Dispositif de commande (1) selon l'une quelconque des revendications 3 à 6, **caractérisé en ce qu'**il comporte :
- un circuit principal (59) renfermant la batterie principale (4) connectée au réseau d'alimentation en énergie électrique (5), et le second interrupteur (K2) reliant la batterie principale (4) au pont redresseur (P),
- un circuit dérivé (60) branché en parallèle aux bornes du circuit principal (59), et comprenant la source de tension secondaire (6) en série avec le premier interrupteur (K1),
- et un convertisseur DC/DC (62) réversible connecté électriquement entre le circuit principal (59) et le circuit dérivé (60) entre le pôle positif de la batterie principale (4) et un point milieu du premier interrupteur (K1) et de la source de tension secondaire (6).

11. Dispositif de commande (1) selon la revendication 10, **caractérisé en ce qu'**un circuit superviseur (63) permet de contrôler et de piloter l'état de commutation des interrupteurs (K1, K2), l'état de charge de la batterie principale (4) et de la source de tension secondaire (6), le sens de conversion du convertisseur DC/DC (62), et le mode de fonctionnement du pont redresseur (P) en mode alternateur ou en mode moteur.

12. Dispositif de commande (1) selon la revendication 10 ou 11, caractérisé en ce le premier interrupteur (K1) est traversé par le courant maximum permanent de l'alternateur-démarreur (2) en mode alternateur, alors que le deuxième interrupteur (K2) est utilisé pour les phases transitoires lorsque la tension de sortie de l'alternateur-démarreur (2) est supérieure à un seuil de tension prédéterminé.

13. Dispositif de commande (1) selon la revendication 12, caractérisé en ce le circuit superviseur (63) inverse l'état de commutation des interrupteurs (K1, K2) lorsque la tension de sortie de l'alternateur-démarreur (2) est régulée au-dessus du seuil de tension, le premier interrupteur (K1) étant ouvert, et le deuxième interrupteur (K2) étant fermé, de manière à fournir le courant du réseau d'alimentation en énergie électrique (5) par le convertisseur DC/DC (62).

14. Dispositif de commande (1) selon la revendication 13, **caractérisé en ce que** l'énergie de l'alternateur-démarreur (2) fonctionnant en mode alternateur permet en position de fermeture du deuxième interrupteur (K2), d'autoalimenter le convertisseur DC/DC (62) et de charger la source de tension secondaire (6) en accumulant de l'énergie.

15. Dispositif de commande (1) selon l'une quelconque des revendications 10 à 14, **caractérisé en ce que** des récepteurs (64) de fortes puissance sont connectés électriquement en parallèle du circuit dérivé (60) et de l'alternateur-démarreur (2).

## Claims

1. Control device (1) for an alternator-starter (2) of a motor vehicle, configured to be linked to a ground and to operate reversibly as an electricity generator in a mode called alternator mode and as an electric motor in a mode called motor mode to start a heat engine, comprising a command and control unit (3) for controlling the alternator-starter in alternator mode or in motor mode, an electrical energy power supply network (5), a main battery (4) connected to the electrical energy power supply network (5) and to the ground of the alternator-starter, the alternator-starter comprising:
- a number of phases each comprising at least one winding (E1, E2, E3),
- a stator (S) equipped with the phase windings,
- an inverter (P, 20) comprising controlled switches (T) which powers the windings of the phases of the stator for its operation in motor mode,
- a rectifier bridge (P) for rectifying the current generated by the windings of the phases of the stator for its operation in alternator mode, in which the inverter (P, 20) is powered in motor mode by a starter control unit (9) comprising a secondary voltage source (6) and capable of supplying a voltage greater than that present on the electrical energy power supply network (5) to increase the torque of the alternator-starter on starting the heat engine, the secondary voltage source (6) being separate from the main battery (4) and consisting of at least one double-layer capacitor, **characterized in that** the inverter is linked to the positive terminal of the secondary voltage source (6) via a first switch (K1) of electronic type in motor mode, whereas the rectifier bridge (P) is linked to the positive terminal of the main battery (4) via a second switch (K2) of electronic type in alternator mode, **in that** it comprises a circuit (8, 63) for controlling the switching state of the first (K1) and of the second (K2) switches, configured so that these two switches are not closed at the same time, **in that** the first switch (K1) and the second switch (K2) have different characteristics and **in that** the second switch (K2) supports the permanent maximum current of the electrical machine in alternator mode, whereas the first switch (K1) temporarily supports a higher current for the transient phases in motor mode.

2. Control device (1) according to Claim 1, **characterized in that** the starter control unit (9) comprises a secondary voltage source (6) connected in series with the main battery (4).

3. Control device (1) according to Claim 1, **characterized in that** the starter control unit (9) comprises a secondary voltage source (6) connected in parallel with the main battery (4).

4. Control device (1) according to any one of Claims 1 to 3, **characterized in that** the first and second switches (K1, K2) are transistors of MOSFET type.

5. Control device (1) according to Claim 4, **characterized in that** the MOSFET switches (K1, K2) each consist of two MOSFET transistors mounted head-to-tail in series (K11, K12, K21, K22).

6. Control device (1) according to Claim 4, **characterized in that** the two switches (K1, K2) are activated in phase opposition.

7. Control device (1) according to any one of Claims 1 to 6, **characterized in that** the two switches (K1, K2) are driven by a slave switching and control unit (8) of the control and command unit (3) of the alternator-starter.

8. Control device (1) according to any one of Claims 1 to 7, **characterized in that** the load level of the secondary voltage source (6) is controlled and managed by a management unit (7).

9. Control device (1) according to any one of Claims 1 to 8, **characterized in that** the voltage of the secondary voltage source (6) can vary between 3 volts and 12 volts.

10. Control device (1) according to any one of Claims 3 to 6, **characterized in that** it comprises:
- a main circuit (59) including the main battery (4) connected to the electrical energy power supply network (5), and the second switch (K2) linking the main battery (4) to the rectifier bridge (P),
- a shunt circuit (60) connected in parallel to the terminals of the main circuit (59), and comprising the secondary voltage source (6) in series with the first switch (K1),
- and a reversible DC/DC converter (62) electrically connected between the main circuit (59) and the shunt circuit (60) between the positive pole of the main battery (4) and a midpoint of the first switch (K1) and of the secondary voltage source (6).

11. Control device (1) according to Claim 10, **characterized in that** a supervisor circuit (63) is provided to monitor and control the switching state of the switches (K1, K2), the state of charge of the main battery (4) and of the secondary voltage source (6), the direction of conversion of the DC/DC converter (62), and the operating mode of the rectifier bridge (P), alternator mode or motor mode.

12. Control device (1) according to Claim 10 or 11, **characterized in that** the first switch (K1) carries the permanent maximum current of the alternator-starter (2) in alternator mode, whereas the second switch (K2) is used for the transient phases when the output voltage of the alternator-starter (2) is above a predetermined voltage threshold.

13. Control device (1) according to Claim 12, **characterized in that** the supervisor circuit (63) reverses the switching state of the switches (K1, K2) when the output voltage of the alternator-starter (2) is set above the voltage threshold, the first switch (K1) being open, and the second switch (K2) being closed, so as to supply the current from the electrical energy power supply network (5) via the DC/DC converter (62).

14. Control device (1) according to Claim 13, **characterized in that** the energy of the alternator-starter (2) operating in alternator mode makes it possible, in the closed position of the second switch (K2), to self-power the DC/DC converter (62) and charge the secondary voltage source (6) by accumulating energy.

15. Control device (1) according to any one of Claims 10 to 14, **characterized in that** high-power receivers (64) are electrically connected in parallel to the shunt circuit (60) and the alternator-starter (2).

## Patentansprüche

1. Steuereinrichtung (1) eines Starter-Generators (2) eines Kraftfahrzeugs, der dafür ausgebildet ist, mit einer Masse verbunden zu werden und auf umkehrbare Art und Weise in einer so genannten Generatorbetriebsart als elektrischer Generator und in einer so genannten Motorbetriebsart als Elektromotor zum Starten einer Brennkraftmaschine zu arbeiten, welche eine Steuerungs- und Regelungseinheit (3) zur Steuerung des Starter-Generators in der Generatorbetriebsart oder in der Motorbetriebsart, ein Stromversorgungsnetz (5) und eine an das Stromversorgungsnetz (5) und an die Masse des Starter-Generators angeschlossene Hauptbatterie (4) aufweist, wobei der Starter-Generator Folgendes aufweist:
- mehrere Phasen, die jeweils mindestens eine Wicklung (E1, E2, E3) aufweisen,
- einen Stator (S), der mit den Wicklungen der Phasen ausgestattet ist,
- einen Wechselrichter (P, 20), der gesteuerte Schalter (T) aufweist und der die Wicklungen der Phasen des Stators für dessen Betrieb in der Motorbetriebsart speist,
- eine Gleichrichterbrücke (P) zum Gleichrichten des Stroms, der von den Wicklungen der Phasen des Stators erzeugt wird, für dessen Betrieb in der Generatorbetriebsart, wobei der Wechselrichter (P, 20) in der Motorbetriebsart von einer Startsteuereinheit (9) gespeist wird, die eine sekundäre Spannungsquelle (6) aufweist und geeignet ist, eine Spannung zu liefern, die höher als die in dem Stromversorgungsnetz (5) vorhandene ist, um das Drehmoment des Starter-Generators beim Starten der Brennkraftmaschine zu erhöhen, wobei die sekundäre Spannungsquelle (6) von der Hauptbatterie (4) verschieden ist und aus mindestens einem Doppelschichtkondensator besteht, **dadurch gekennzeichnet, dass** in der Motorbetriebsart der Wechselrichter mit dem Pluspol der sekundären Spannungsquelle (6) über einen ersten Schalter (K1) vom elektronischen Typ verbunden ist, während in der Generatorbetriebsart die Gleichrichterbrücke (P) mit dem Pluspol der Hauptbatterie (4) über einen zweiten Schalter (K2) vom elektronischen Typ verbunden ist, dadurch, dass sie eine Schaltung (8, 63) zur Vorsteuerung des Schaltzustands des ersten (K1) und des zweiten Schalters (K2) aufweist, die so gestaltet ist, dass diese beiden Schalter nicht gleichzeitig geschlossen sind, dadurch, dass der erste Schalter (K1) und der zweite Schalter (K2) unterschiedliche Merkmale aufweisen, und dadurch, dass der zweite Schalter (K2) in der Generatorbetriebsart dem maximalen Dauerstrom der elektrischen Maschine standhält, während der erste Schalter (K1) in der Motorbetriebsart für die Übergangsphasen zeitweilig einem höheren Strom standhält.

2. Steuereinrichtung (1) nach Anspruch 1, **dadurch gekennzeichnet, dass** die Startsteuereinheit (9) eine sekundäre Spannungsquelle (6) aufweist, die mit der Hauptbatterie (4) in Reihe geschaltet ist.

3. Steuereinrichtung (1) nach Anspruch 1, **dadurch gekennzeichnet, dass** die Startsteuereinheit (9) eine sekundäre Spannungsquelle (6) aufweist, die zu der Hauptbatterie (4) parallel geschaltet ist.

4. Steuereinrichtung (1) nach einem der Ansprüche 1 bis 3, **dadurch gekennzeichnet, dass** der erste und der zweite Schalter (K1, K2) Transistoren vom Typ MOSFET sind.

5. Steuereinrichtung (1) nach Anspruch 4, **dadurch gekennzeichnet, dass** die MOSFET-Schalter (K1, K2) jeweils aus zwei MOSFET-Transistoren (K11, K12, K21, K22) bestehen, die antiseriell geschaltet sind.

6. Steuereinrichtung (1) nach Anspruch 4, **dadurch gekennzeichnet, dass** die beiden Schalter (K1, K2) gegenphasig betätigt werden.

7. Steuereinrichtung (1) nach einem der Ansprüche 1 bis 6, **dadurch gekennzeichnet, dass** die beiden Schalter (K1, K2) von einer Schalt- und Regeleinheit (8) vorgesteuert werden, die als Slave der Steuerungs- und Regelungseinheit (3) des Starter-Generators betrieben wird.

8. Steuereinrichtung (1) nach einem der Ansprüche 1 bis 7, **dadurch gekennzeichnet, dass** der Ladezustand der sekundären Spannungsquelle (6) durch eine Verwaltungseinheit (7) gesteuert und verwaltet wird.

9. Steuereinrichtung (1) nach einem der Ansprüche 1 bis 8, **dadurch gekennzeichnet, dass** die Spannung der sekundären Spannungsquelle (6) zwischen 3 Volt und 12 Volt variieren kann.

10. Steuereinrichtung (1) nach einem der Ansprüche 3 bis 6, **dadurch gekennzeichnet, dass** sie Folgendes aufweist:
- einen Hauptstromkreis (59), der die an das Stromversorgungsnetz (5) angeschlossene Hauptbatterie (4) und den die Hauptbatterie (4) mit der Gleichrichterbrücke (P) verbindenden zweiten Schalter (K2) enthält,
- einen Zweigstromkreis (60), der zu den Klemmen des Hauptstromkreises (59) parallel geschaltet ist und die sekundäre Spannungsquelle (6) in Reihe mit dem ersten Schalter (K1) aufweist,
- und einen reversiblen DC/DC-Wandler (62), der elektrisch zwischen dem Hauptstromkreis (59) und dem Zweigstromkreis (60) zwischen dem Pluspol der Hauptbatterie (4) und einem Mittelpunkt des ersten Schalters (K1) und der sekundären Spannungsquelle (6) geschaltet ist.

11. Steuereinrichtung (1) nach Anspruch 10, **dadurch gekennzeichnet, dass** eine Überwachungsschaltung (63) ermöglicht, den Schaltzustand der Schalter (K1, K2), den Ladezustand der Hauptbatterie (4) und der sekundären Spannungsquelle (6), die Wandlungsrichtung des DC/DC-Wandlers (62) und die Funktionsweise der Gleichrichterbrücke (P) in der Generatorbetriebsart oder in der Motorbetriebsart zu kontrollieren und vorzusteuern.

12. Steuereinrichtung (1) nach Anspruch 10 oder 11, **dadurch gekennzeichnet, dass** der erste Schalter (K1) von dem maximalen Dauerstrom des Starter-Generators (2) in der Generatorbetriebsart durchflossen wird, während der zweite Schalter (K2) für die Übergangsphasen verwendet wird, wenn die Ausgangsspannung des Starter-Generators (2) höher als ein vorbestimmter Spannungsschwellenwert ist.

13. Steuereinrichtung (1) nach Anspruch 12, **dadurch gekennzeichnet, dass** die Überwachungsschaltung (63) den Schaltzustand der Schalter (K1, K2) umkehrt, wenn die Ausgangsspannung des Starter-Generators (2) oberhalb des Spannungsschwellenwertes geregelt wird, wobei der erste Schalter (K1) geöffnet ist und der zweite Schalter (K2) geschlossen ist, so dass der Strom des Stromversorgungsnetzes (5) durch den DC/DC-Wandler (62) geliefert wird.

14. Steuereinrichtung (1) nach Anspruch 13, **dadurch gekennzeichnet, dass** die Energie des in der Generatorbetriebsart arbeitenden Starter-Generators (2) in der Schließposition des zweiten Schalters (K2) ermöglicht, eine Selbstspeisung des DC/DC-Wandlers (62) durchzuführen und die sekundäre Spannungsquelle (6) durch Speichern elektrischer Energie zu laden.

15. Steuereinrichtung (1) nach einem der Ansprüche 10 bis 14, **dadurch gekennzeichnet, dass** Empfänger (64) hoher Leistung dem Zweigstromkreis (60) und dem Starter-Generator (2) elektrisch parallel geschaltet sind.
